(19) Europäisches Patentamt
European Patent Office
Office européen des brevets

(11) **EP 1 933 495 A2**

(12) **EUROPEAN PATENT APPLICATION**

(43) Date of publication:
**18.06.2008 Bulletin 2008/25**

(51) Int Cl.:
***H04L 9/06*** *(2006.01)*

(21) Application number: **07121899.4**

(22) Date of filing: **29.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **14.12.2006 JP 2006336719**

(71) Applicant: **FUJITSU LIMITED**
**Kawasaki-shi,**
**Kanagawa 211-8588 (JP)**

(72) Inventors:
• **Okada, Souichi**
**Kawasaki-shi, Kanagawa 211-8588 (JP)**
• **Itoh, Kouichi**
**Kawasaki-shi Kanagawa 211-8588 (JP)**

(74) Representative: **Wilding, Frances Ward et al**
**Haseltine Lake**
**Lincoln House**
**300 High Holborn**
**London WC1V 7JH (GB)**

(54) **Cryptographic operation apparatus for AES**

(57) In a cryptographic operation apparatus, the result of an encryption process, or decryption process, is obtained by disposing two operational circuits (201, 202, 302, 303, 402, 403) in parallel, each comprising four multiplying devices (211 through 214) and an exclusive-OR device (215), and by processing an input data string in two cycles; or by processing an input data string by a single operational circuit (602, 702) in four cycles.

INPUT DATA STRING

101 — DIVIDING DEVICE

102-1 — FIRST MULTIPLYING DEVICE   102-2 — SECOND MULTIPYING DEVICE   102-3 — THIRD MULTIPLYING DEVICE   102-4 — FOURTH MULTIPLYING DEVICE

103 — LATCHING DEVICE

104 — EXCLUSIVE-OR DEVICE

EXCLUSIVE-OR

F I G. 6

EP 1 933 495 A2

**Description**

**Background of the Invention**

**Field of the Invention**

The present invention relates to a cryptographic operation apparatus, and in particular a cryptographic operation apparatus for performing cryptographic operations in the AES (Advanced Encryption Standard), which is the industry standard for common key block ciphers.

**Description of the Related Art**

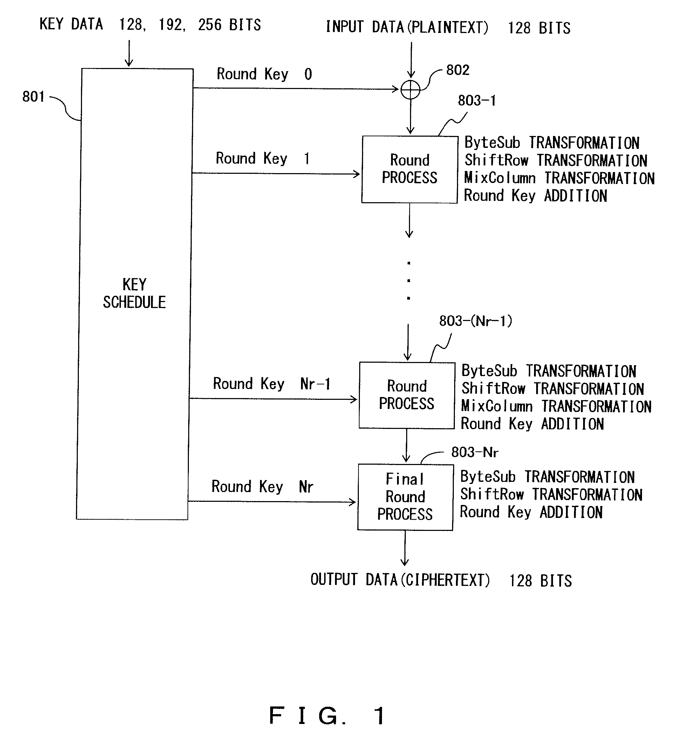

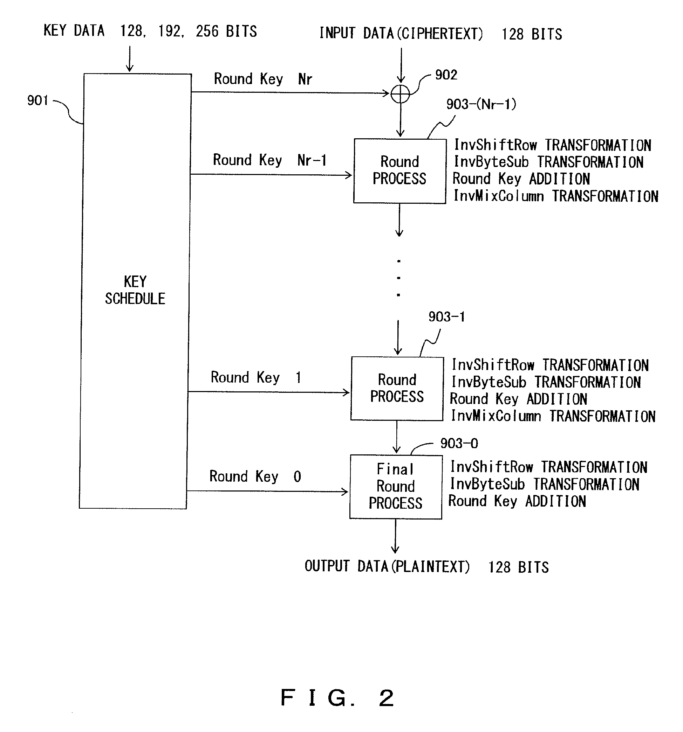

Fig. 1 shows an AES encryption algorithm specified in FIPS 197 (Federal Information Processing Standards 197)(see Non-patent Document 1 (below) for an example). Fig. 2 shows an AES decryption algorithm.

Non-patent Document 1: "Federal Information Processing Standards Publication 197," [online], [Searched October 2, 2006], Internet <URL: http://csrc.nist.gov/publications/fips/fips197/fips-197.pdf >

The encryption algorithm in Fig. 1 generates a 128-bit ciphertext from a 128-bit plaintext. A secret key data can be selected from three kinds of length: 128 bits, 192 bits, and 256 bits.

First, a key schedule 801 is performed to generate Nr+1 round keys (Round Key) 0 through Nr from key data. An exclusive-OR (XOR) operation unit 802 outputs an XOR of a plaintext and the Round Key 0.

Round processes 803-k (k=1, 2, ... , Nr-1) each comprise four processes: ByteSub transformation, ShiftRow transformation, MixColumn transformation, and Round Key addition. Of these processes, the Round Key addition process uses the Round Key k. Using these round processes 803-1 through 803- (Nr-1), a round process is iteratively performed Nr-1 times on the XOR operation unit's 802 output.

The last round process 803-Nr comprises three kinds of processes: ByteSub transformation, ShiftRow transformation, and Round Key addition. A ciphertext is generated from the output of the round process 803- (Nr-1) . Of these processes, the Round Key addition uses the Round Key Nr.

The decryption algorithm in Fig. 2 generates a 128-bit plaintext from a 128-bit ciphertext. First, a key schedule 901 is performed to generate Nr+1 round keys (Round Key) 0 through Nr from key data. An XOR operation unit 902 outputs the XOR of a ciphertext and the Round Key Nr.

Round processes 903-k (k=1, 2, ... , Nr-1) each comprise four processes: InvShiftRow (Inverse ShiftRow) transformation, InvByteSub (Inverse ByteSub) transformation, Round Key addition, and InvMixColumn (Inverse MixColumn) transformation. Of these processes, Round Key addition uses the Round Key k. Using these round processes 903-(Nr-1) through 903-1, a round process is iteratively performed on the XOR operation unit's 902 output.

The last round process 903-0 comprises three kinds of processes: InvShiftRow (Inverse ShiftRow) transformation, InvByteSub (Inverse ByteSub) transformation, and Round Key addition. A plaintext is generated from the output from the round process 903-1. Of these processes, the Round Key addition uses the Round Key 0.

With the assumption of embedding the AES block cipher operation processes onto a smart card (or similar mechanism comprising an embedded computer chip), the cipher circuit is required to be small in size, while maintaining a certain level of processing speed. In this requirement, it is difficult to load a circuit onto a smart card using a method in which all of the round processes in the AES algorithms (shown in Fig. 1 and Fig. 2) are implemented as hardware in 128-bit units, because the circuit would become oversized.

For this reason, an AES cipher circuit that is loadable onto a smart card has been suggested. One suggestion has been to use a small circuit in which each function of the round process is realized in 32-bit units (see Patent Document 1 (below) for an example).

Patent Document 1: Japanese Patent Application Publication No. 2003-015522

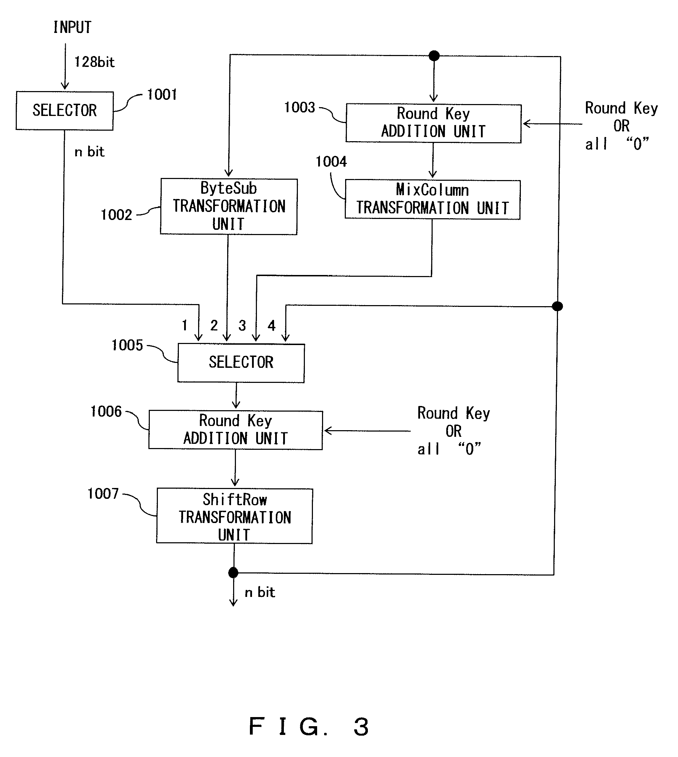

As shown in Fig. 3, a small circuit is provided with a basic configuration to perform the processes in one round using the AES algorithm.

The basic configuration in Fig. 3 comprises selectors 1001, 1005, a ByteSub transformation unit 1002, Round Key addition units 1003, 1006, a MixColumn transformation unit 1004, and a ShiftRow transformation unit 1007.

The selector 1001 selects n-bit data (for example, n=32) from 128-bit input data, and outputs the selected data to the selector 1005. The selector 1005 selects an output from the selector 1001, ByteSub transformation unit 1002, MixColumn transformation unit 1004, or ShiftRow 1007, and outputs the selected output to the Round Key addition unit 1006. The Round Key addition unit 1006 performs an addition process on the output from the selector 1005, and a Round Key or all "0". The ShiftRow transformation unit 1007 applies a ShiftRow transformation on the output from the Round Key addition unit 1006.

The ByteSub transformation unit 1002 applies a Byte Sub transformation on the output from the ShiftRow transformation unit 1007. The Round Key addition unit 1003 performs an addition process on the output from the ShiftRow transformation unit 1007, and a Round Key or all "0". The MixColumn transformation unit 1004 applies a MixColumn transformation on the output from the Round Key addition unit 1003.

Fig. 4 and Fig. 5 show the configuration of a MixColumn transformation circuit proposed in Patent Document 1. The MixColumn transformation circuit comprises four operational circuits 1101 through 1104, and performs a MixColumn transformation in the encryption process, or an InvMixColumn transformation in the decryption process.

The operational circuit 1101 comprises four multipliers 1111(MULe2), 1112(MULb3), 1113(MULd1), and 1114 (MUL91), each performing multiplication in 8-bit units, and XOR operation units 1115 through 1117 for calculating the XOR of the outputs from the multipliers.

In the same manner, the operational circuit 1102 comprises multipliers 1121(MUL91), 1122(MULe2), 1123 (MULb3), and 1124(MULd1), and XOR operation units 1125 through 1127. The operational circuit 1103 comprises multipliers 1131(MULd1), 1132(MUL91), 1133(MULe2), and 1134(MULb3), and XOR operation units 1135 through 1137. The operational circuit 1104 comprises multipliers 1141(MULb3), 1142(MULd1), 1143(MUL91), and 1144(MULe2), and XOR operation units 1145 through 1147.

When multiplier coefficients are expressed in two-digit hexadecimal numbers, MULe2 multiplies input data by "02" in the encryption process, and multiplies input data by "0E" in the decryption process. MULb3 multiplies input data by "03" in the encryption process, and multiplies input data by "0B" in the decryption process. MULd1 multiplies input data by "01" in the encryption process, and multiplies input data by "0D" in the decryption process. MUL91 multiplies input data by "01" in the encryption process, and multiplies input data by "09" in the decryption process.

The following 8-bit data (a0 through a3 and b0 through b3) express 32-bit input data I_DT[31:0] and output data O_DT[31:0] from the MixColumn transformation circuit.

$$a0 = I\_DT[31:24] \qquad (1)$$

$$a1 = I\_DT[23:16] \qquad (2)$$

$$a2 = I\_DT[15:8] \qquad (3)$$

$$a3 = I\_DT[7:0] \qquad (4)$$

$$b0 = O\_DT[31:24] \qquad (5)$$

$$b1 = O\_DT[23:16] \qquad (6)$$

$$b2 = O\_DT[15:8] \qquad (7)$$

$$b3 = O\_DT[7:0] \qquad (8)$$

The MixColumn transformation circuit transforms a column composed of (a0, a1, a2, a3) into a column composed of (b0, b1, b2, b3). The MixColumn transformations in the encryption process and the decryption process are respectively expressed by the following equations.

Encryption process

$$b0 = 02*a0+03*a1+01*a2+01*a3 \qquad (11)$$

$$b1 = 01*a0+02*a1+03*a2+01*a3 \qquad (12)$$

$$b2 = 01*a0+01*a1+02*a2+03*a3 \qquad (13)$$

$$b3 = 03*a0+01*a1+01*a2+02*a3 \qquad (14)$$

Decryption process

$$b0 = 0E*a0+0B*a1+0D*a2+09*a3 \qquad (15)$$

$$b1 = 09*a0+0E*a1+0B*a2+0D*a3 \qquad (16)$$

$$b2 = 0D*a0+09*a1+0E*a2+0B*a3 \qquad (17)$$

$$b3 = 0B*a0+0D*a1+09*a2+0E*a3 \qquad (18)$$

In the above equations, the coefficients for each term represent two-digit hexadecimal numbers, symbols "*" and "+" respectively represent multiplication and XOR operations. The operational circuits 1101, 1102, 1103, and 1104 output values b0, b1, b2, and b3, respectively.

In recent years, smart cards have become multi-functional and secure, and have been required to be equipped with various functions. Therefore, it is desirable to achieve further size reductions on the AES cipher circuit.

These size reductions are further needed because, for example, there is a threat that a form of cryptanalysis called a side channel attack may be used to identify a smart card's secret key and the like. A side channel attack includes a power analysis attack, such as an SPA (Simple Power Analysis) or a DPA (Differential Power Analysis), and electromagnetic analysis (EMA) attacks.

When a mask circuit, or a multiple-S-box circuit, is embedded onto a smart card as a defense mechanism against the side channel attack, the large circuit size makes it difficult to accommodate an AES cipher circuit. Accordingly, the problem occurs because a secure smart card cannot be provided.

**Summary of the Invention**

It is desirable to further reduce the size of a conventional AES cipher circuit.

A first cryptographic operation apparatus comprises a dividing device, a first multiplying device, a second multiplying device, a third multiplying device, a fourth multiplying device, a latching device, and an XOR device.

The dividing device divides an input data string into first, second, third, and fourth data strings and outputs the data strings. The first multiplying device multiplies the first data string by a first coefficient and outputs the first multiplication result in a first period, and multiplies the third data string by the first coefficient and outputs a second multiplication result in the second period. The second multiplying device multiplies the second data string by a second coefficient and outputs a third multiplication result in the first period, and multiplies the fourth data string by the second coefficient and outputs a fourth multiplication result in the second period.

The third multiplying device multiplies the first data string by a third coefficient and outputs a fifth multiplication result in the first period, and multiplies the third data string by the third coefficient and outputs a sixth multiplication result in the second period. The fourth multiplying device multiplies the second data string by a fourth coefficient and outputs a seventh multiplication result in the first period, and multiplies the fourth data string by the fourth coefficient and outputs an eighth multiplication result in the second period.

The latching device latches an XOR of the first and third multiplication results, and an XOR of the fifth and seventh multiplication results, in the first period. The XOR device outputs an XOR of the XOR of the first and third multiplication results, and an XOR of the sixth and eighth multiplication results, and outputs an XOR of the XOR of the fifth and seventh multiplication results and an XOR of the second and fourth multiplication results in the second period.

A second cryptographic operation apparatus comprises a dividing device, a first multiplying device, a second multiplying device, a third multiplying device, a fourth multiplying device, and an XOR device.

The dividing device divides an input data string into first, second, third, and fourth data strings and outputs the data strings. The dividing device outputs the first, second, third, and fourth data strings respectively to the first, second, third, and fourth multiplying devices in the first period, and outputs the first, second, third, and fourth data strings to the first, second, third, and fourth multiplying devices in the second period, in a different order than the order in the first period.

The first multiplying device multiples the first data string by a first coefficient and outputs a first multiplication result in the first period, and multiples the data string input from the dividing device by the first coefficient and outputs a second multiplication result in the second period. The second multiplying device multiplies the second data string by a second coefficient and outputs a third multiplication result in the first period, and multiplies the data string input from the dividing device by the second coefficient and outputs a fourth multiplication result in the second period.

The third multiplying device multiplies the third data string by a third coefficient and outputs a fifth multiplication result in the first period, and multiplies the data string input from the dividing device by the third coefficient and outputs a sixth multiplication result in the second period. The fourth multiplying device multiplies the fourth data string by a fourth coefficient and outputs a seventh multiplication result in the first period, and multiplies a data string input from the dividing device by the fourth coefficient and outputs an eighth multiplication result in the second period.

The XOR device outputs an XOR of the first, third, fifth, and seventh multiplication results in the first period, and outputs an XOR of the second, fourth, sixth, and eighth multiplication results in the second period.

**Brief Description of the Drawings**

Fig. 1 shows an AES encryption algorithm.
Fig. 2 shows an AES decryption algorithm.
Fig. 3 shows the basic configuration of a round process.
Fig. 4 is a block diagram of a conventional MixColumn transformation circuit.
Fig. 5 is a detail block diagram of a conventional MixColumn transformation circuit.
Fig. 6 is a diagram showing the principle of a cryptographic operation apparatus embodying the present invention.
Fig. 7 is a block diagram of a first MixColumn transformation circuit.
Fig. 8 is a block diagram of a second MixColumn transformation circuit.
Fig. 9 is a block diagram of a third MixColumn transformation circuit.
Fig. 10 shows a comparison of the circuit sizes of the MixColumn transformation circuits.
Fig. 11 is a block diagram of a fourth MixColumn transformation circuit.
Fig. 12 is a block diagram of a fifth MixColumn transformation circuit.

**Detailed Description of Preferred Embodiments**

Hereinbelow, the best modes for carrying out the present invention are described in detail, referring to the drawings.

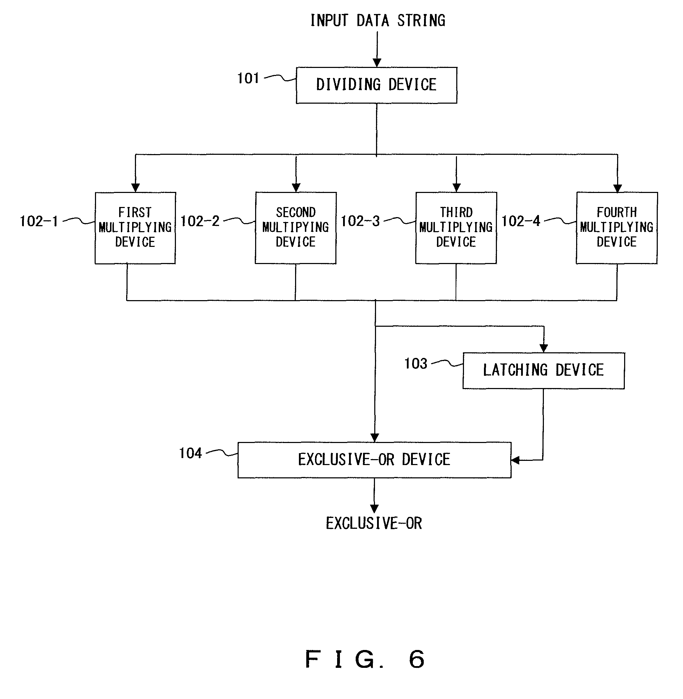

Fig. 6 is a diagram showing the first and second principle cryptographic operation apparatuses embodying the present invention.
The first cryptographic operation apparatus comprises a dividing device 101, a first multiplying device 102-1, a second multiplying device 102-2, a third multiplying device 102-3, a fourth multiplying device 102-4, a latching device 103, and an XOR device 104.
The dividing device 101 divides an input data string into first, second, third, and fourth data strings and outputs the data strings. The multiplying device 102-1 multiplies the first data string by a first coefficient and outputs a first multiplication result in the first period, and multiplies the third data string by the first coefficient and outputs a second multiplication result in the second period. The multiplying device 102-2 multiplies the second data string by a second coefficient and outputs a third multiplication result in the first period, and multiplies the fourth data string by the second coefficient and outputs a fourth multiplication result in the second period.

The multiplication device 102-3 multiplies the first data string by a third coefficient and outputs a fifth multiplication result in the first period, and multiplies the third data string by the third coefficient and outputs a sixth multiplication result in the second period. The multiplying device 102-4 multiplies the second data string by a forth coefficient and outputs a seventh multiplication result in the first period, and multiplies the fourth data string by the forth coefficient and outputs an eighth multiplication result in the second period.

The latching device 103 latches an XOR of the first and third multiplication results and an XOR of the fifth and seventh multiplication results in the first period. The XOR device 104 outputs the XOR of the XOR of the first and third multiplication results and an XOR of the sixth and eighth multiplication results. It also outputs an XOR of the XOR of the fifth and seventh multiplication results and an XOR of the second and fourth multiplication results in the second period.

In the first period, the first and second data strings of the input data string are input into the multiplying devices 102-1 and 102-2, respectively, and the first and second data strings are input into the multiplying devices 102-3 and 102-4, respectively. Then, the multiplying devices 102-1 through 102-4, output the first, third, fifth, and seventh multiplication results, respectively, and the latching device 103 latches the XOR of the first and third multiplication results and the XOR of the fifth and seventh multiplication results.

In the second period, the third and fourth data strings of the input data string are input into the multiplying devices 102-1 and 102-2, respectively, and the third and fourth data strings are input into the multiplying devices 102-3 and 102-4, respectively. Then, the multiplying devices 102-1 through 102-4, outputs the second, fourth, sixth, and eighth multiplication results, respectively, and the XOR device 104 generates the XOR of the first, third, sixth, and eighth multiplication results and the XOR of the fifth, seventh, second and fourth multiplication results, using the multiplication results and the two XOR outputs from the latching device 103.

When an input data string, being the object of a MixColumn transformation in the encryption process, or an inverse MixColumn transformation in the decryption process, of the AES is input into the dividing device 101, the XOR device 104 outputs an XOR corresponding to the half of the transformation result in the second period.

The other half of the transformation result can be obtained by disposing the same circuit as the one comprising the multiplying devices 102-1 through 102-4, the latching device 103 and the XOR device 104, or by changing the order of the first through fourth data strings and inputting them to the multiplying devices 102-1 through 102-4 in the third and fourth periods. The former case only requires a total of eight multiplying devices disposed in parallel, and the latter case only requires a total of four multiplying devices disposed in parallel. Therefore, the size of the circuit can be reduced compared to a conventional MixColumn transformation circuit in which sixteen multipliers are disposed in parallel.

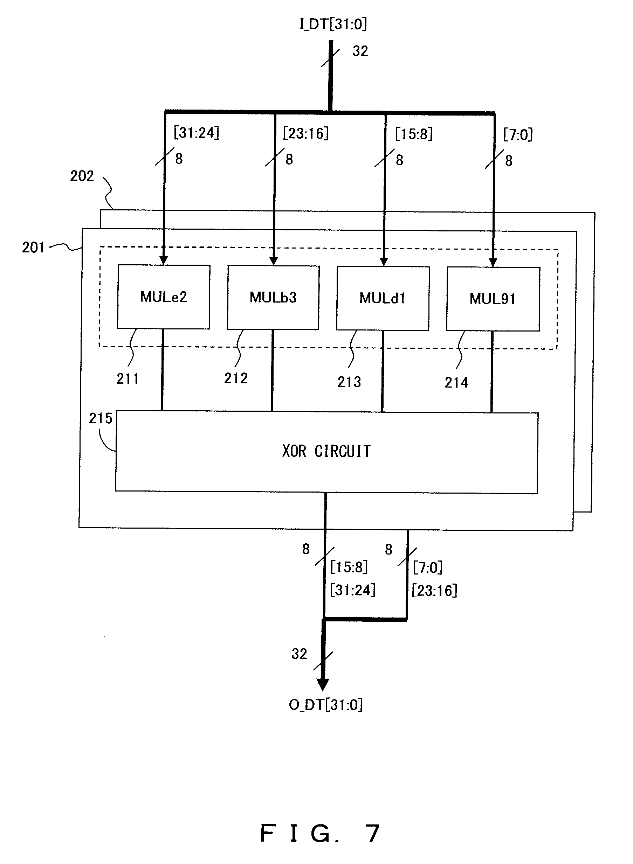

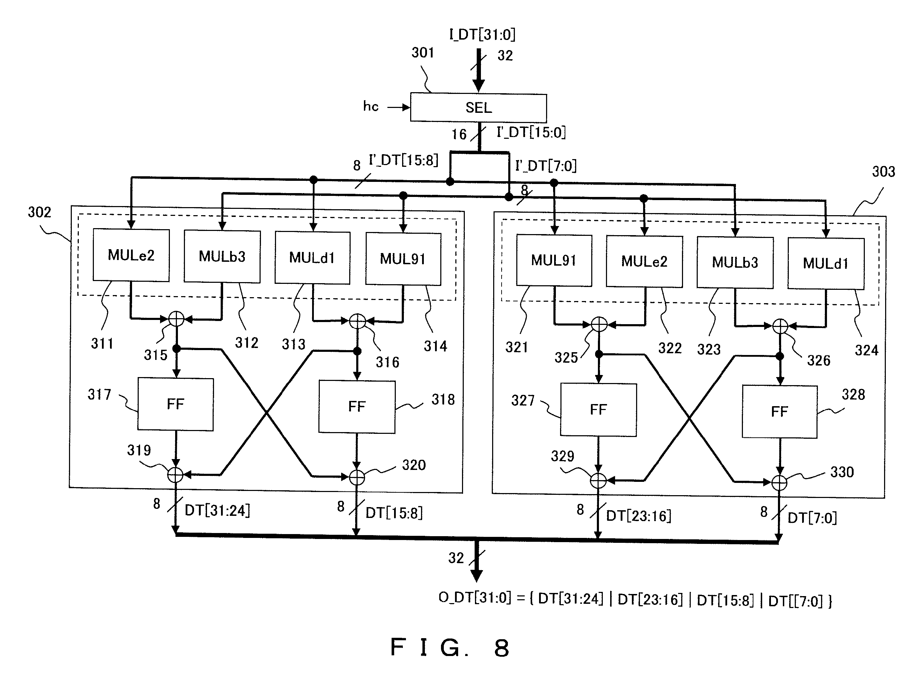

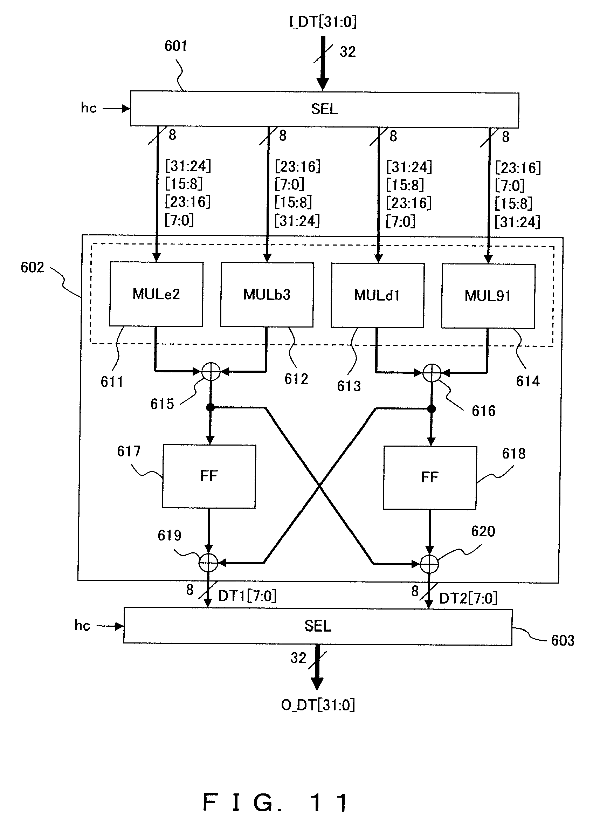

In the first cryptographic operation apparatus, the dividing device 101 corresponds, for example, to a selector 301 in Fig. 8 or a selector 601 in Fig. 11 (described later.) The multiplying devices 102-1 through 102-4 correspond, for example, to multipliers 211 through 214 in Fig. 7, multipliers 311 through 314 in Fig. 8, or multipliers 611 through 614 in Fig. 11 (described later.)

The latching device 103 corresponds, for example, to an XOR circuit 215 in Fig. 7, XOR operation units 315 and 316, and flip-flop circuits 317 and 318 in Fig. 8. Additionally the latching device 103 corresponds to XOR operation units 615 and 616, and flip-flop circuits 617 and 618 in Fig. 11. The XOR device 104 corresponds, for example, to an XOR circuit 215 in Fig. 7, XOR operation units 319 and 320 in Fig. 8, or XOR operation units 619 and 620 in Fig. 11.

The second cryptographic operation apparatus comprises a dividing device 101, a first multiplying device 102-1, a second multiplying device 102-2, a third multiplying device 102-3, a fourth multiplying device 102-4, and an XOR device 104.

The dividing device 101 divides an input data string into first, second, third, and fourth data strings and outputs the data strings. The dividing device 101 outputs the first, second, third, and fourth data strings to the multiplying devices 102-1, 102-2, 102-3, and 102-4, respectively, in the first period, and outputs the first, second, third, and fourth data strings to the multiplying devices 102-1, 102-2, 102-3, 102-3 in the second period, in an order different from the order in the first period.

The multiplying device 102-1 multiplies the first data string by a first coefficient and outputs a first multiplication result in the first period, and multiplies a data string input from the dividing device 101 by the first coefficient and outputs a second multiplication result in the second period. The multiplying device 102-2 multiplies the second data string by a second coefficient and outputs a third multiplication result in the first period, and multiplies a data string input from the dividing device 101 by the second coefficient and outputs a fourth multiplication result in the second period.

The multiplying device 102-3 multiplies the third data string by a third coefficient and outputs a fifth multiplication result in the first period, and multiplies a data string input from the dividing device 101 by the third coefficient and outputs a sixth multiplication result in the second period. The multiplying device 102-4 multiplies the fourth data string by a fourth coefficient and outputs a seventh multiplication result in the first period, and multiplies a data string input from the dividing device 101 by the fourth coefficient and outputs an eighth multiplication result in the second period.

The XOR device 104 outputs the XOR of the first, third, fifth, and seventh multiplication results in the first period, and outputs the XOR of the second, fourth, sixth, and eighth multiplication results.

In the first period, the first through fourth data strings are input into the multiplying devices 102-1 through 102-4, respectively. Then, the multiplying devices 102-1 through 102-4 output the first, third, fifth, and seventh multiplication results, respectively, and the XOR device 104 generates the XOR of the multiplication results.

In the second period, the first through fourth data strings are input into the multiplying devices 102-1 through 102-4, in an order different from the order in the first period. Then, the multiplying devices 102-1 through 102-4 outputs the second, fourth, sixth, and eighth multiplication results, respectively, and the XOR device 104 generates an XOR of the multiplication results.

When an input data string, being the object of a MixColumn transformation in the encryption process or an inverse MixColumn transformation in the decryption process of the AES, is input into the dividing device 101, the XOR device 104 outputs an XOR corresponding to a quarter of the transformation result respectively in the first and second periods.

The other half of the transformation result can be obtained by disposing the same circuit as the one comprising the multiplying devices 102-1 through 102-4, and the XOR device 104, or by further changing the order of the first through fourth data strings in the third and fourth periods and inputting them into the multiplying devices 102-1 through 102-4. Therefore, as well as the first cryptographic operation apparatus, the size of the circuit can be reduced compared to a conventional MixColumn transformation circuit.

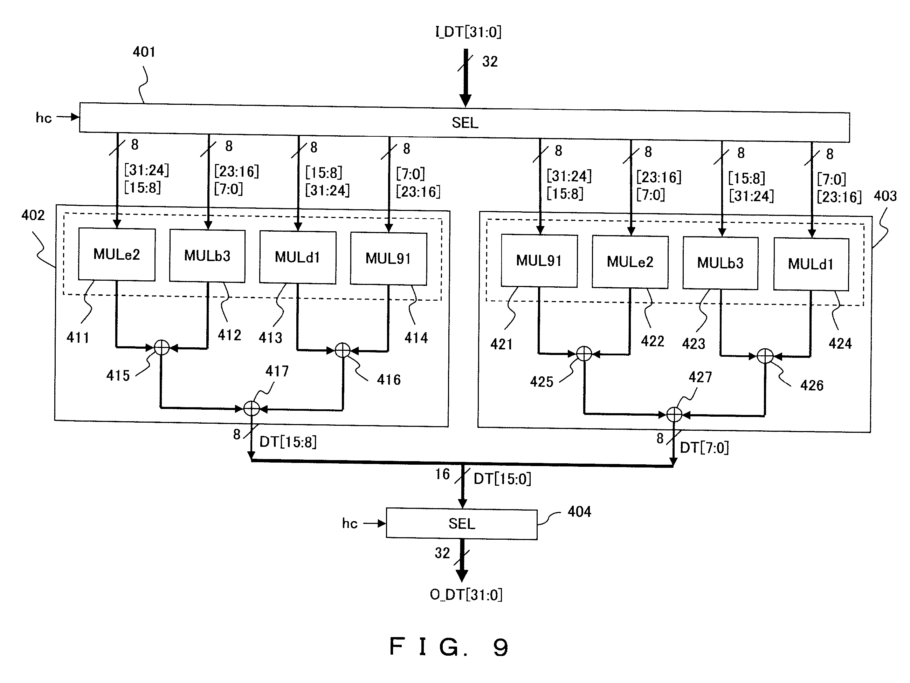

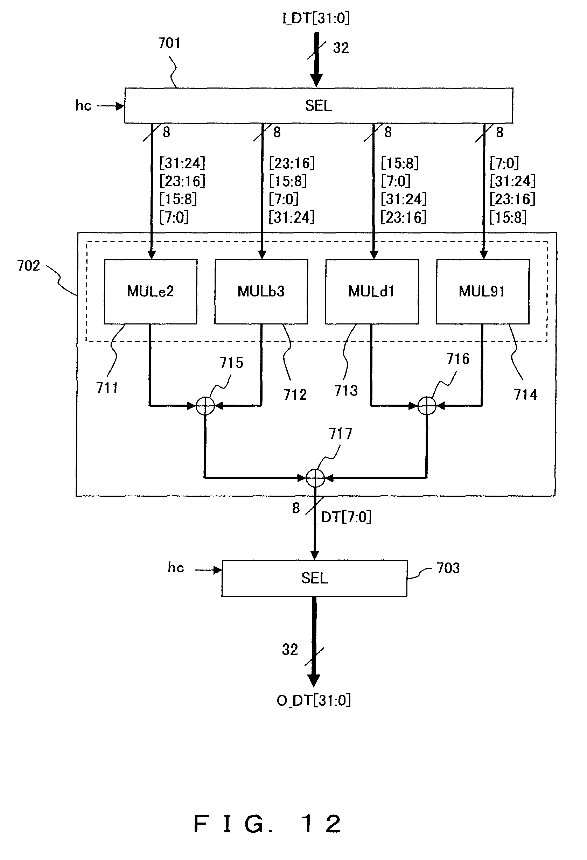

In the second cryptographic operation apparatus, the dividing device 101 corresponds, for example, to a selector 401 in Fig. 9 or a selector 701 in Fig. 12 described later. The multiplying devices 102-1 through 102-4 correspond, for example, to multipliers 211 through 214 in Fig. 7 (described later), multipliers 411 through 414 in Fig. 9, or multipliers 711 through 714 in Fig. 12. The XOR device 104 corresponds, for example, to an XOR circuit 215 in Fig. 7, XOR operation units 415 through 417 in Fig. 9, or XOR operation units 715 through 717 in Fig. 12.

According to embodiments of the present invention, the size of a MixColumn transformation circuit in an AES circuit is reduced, and the AES encryption algorithm and decryption algorithm can be performed in a more compact circuit. Therefore, the AES circuit can easily be loaded onto a smart card, making it possible to realize a secure multifunction smart card embedded with functions like a defensive function against a side channel attack.

Fig. 7 shows the configuration of a first MixColumn transformation circuit in an AES circuit. The MixColumn transformation circuit in Fig. 7 comprises two operational circuits 201 and 202. The operational circuit 201 comprises four multipliers 211(MULe2), 212(MULb3), 213(MULd1), and 214 (MUL91) (each performing multiplication in 8-bit units), as well as an XOR circuit for calculating the XOR of the outputs from the multipliers. The XOR circuit 215 comprises a buffer (flip-flop circuit) and an XOR operation unit. In the same manner, the operational circuit 202 comprises four multipliers and an XOR circuit.

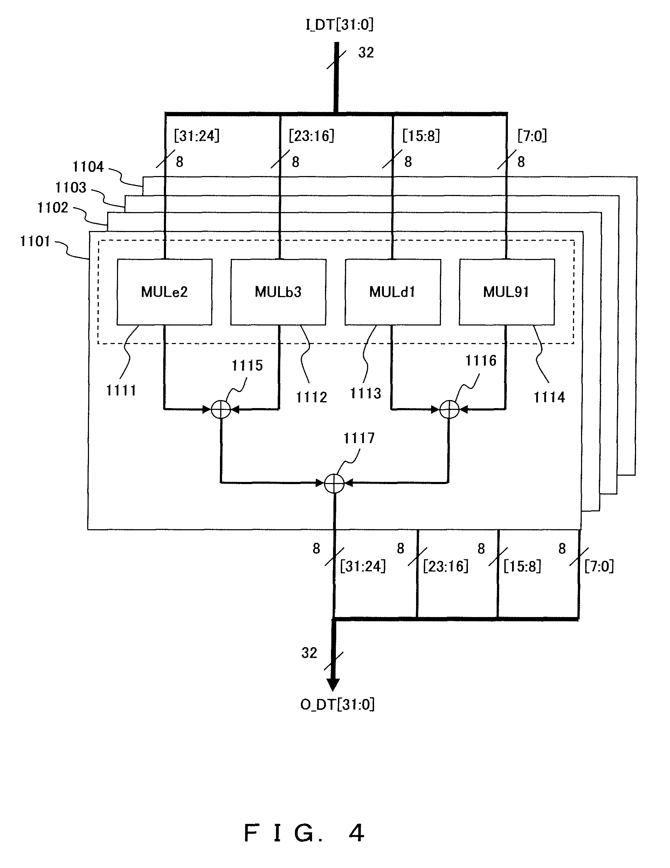

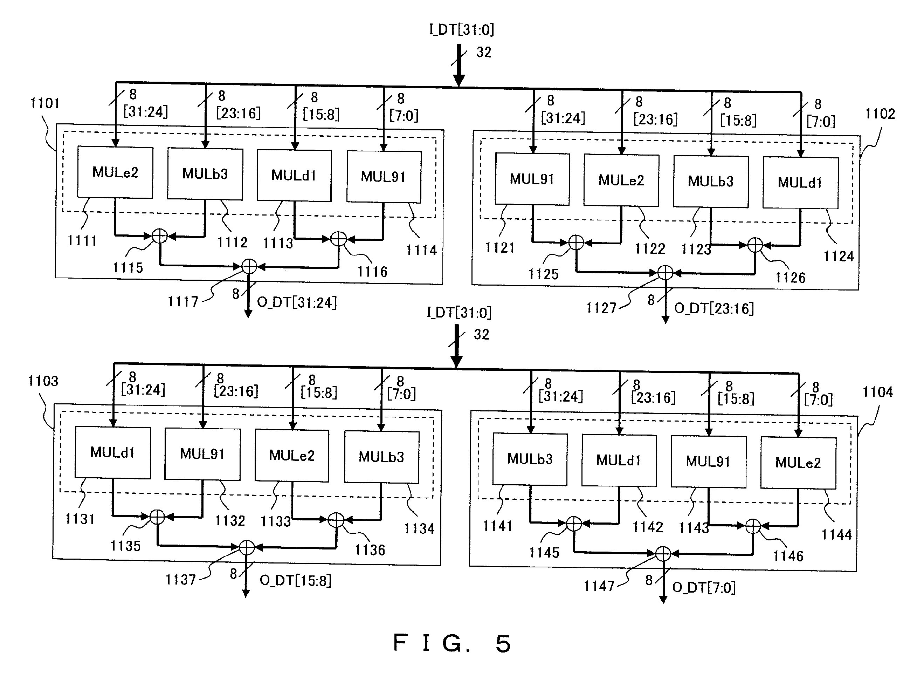

The conventional MixColumn transformation circuit (shown in Fig. 4 and Fig. 5), has four operational circuits disposed in parallel, each comprising four multipliers (MULe2, MULb3, MULd1, and MUL91) and three XOR operation units, and is configured to process 32-bit data in one cycle. On the other hand, the MixColumn transformation circuit in Fig. 7 has two operational circuits disposed in parallel, each comprising four multipliers and an XOR circuit, and is configured to process 32-bit data in two cycles.

Fig. 8 shows an embodiment (a second MixColumn transformation circuit) of the MixColumn transformation circuit in Fig. 7. The MixColumn transformation circuit in Fig. 8 comprises a selector 301 and two operational circuits 302 and 303.

The operational circuit 302 comprises four multipliers 311(MULe2), 312(MULb3), 313(MULd1), and 314 (MUL91), four XOR operation units 315, 316, 319, and 320, and two flip-flop circuits 317 and 318. The operational circuit 303 comprises four multipliers 321(MUL91), 322(MULe2), 323(MULb3), and 324(MULd1), four XOR operation units 325, 326, 329, and 330, and two flip-flop circuits 327 and 328.

In the first cycle, "0" is input as a selection signal hc, and "1" is input as the selection signal hc in the next cycle.

The selector 301 divides 32-bit input data I_DT[31:0] into upper 16 bits I_DT[31:16] and lower 16 bits I_DT[15:0]. When the selection signal hc is "0", the selector 301 outputs I_DT[31:16] as 16-bit input data I'_DT[15:0], and outputs I_DT[15:0] as I'_DT[15:0] when the selection signal hc is "1".

Upper 8 bits I'_DT[15:8] of I'_DT[15:0] are input into the multipliers 311, 313 in the operational circuit 302, and the multipliers 321, 323 of the operational circuit 303. Lower 8 bits I'_DT[7:0] of I'_DT[15:0] are input into the multipliers 312, 314 of the operational circuit 302 and the multipliers 322, 324 of the operational circuit 303.

The XOR operation unit 315 outputs the XOR of the outputs from the multipliers 311 and 312, and the XOR operation unit 316 outputs the XOR of the outputs from the multipliers 313 and 314. The flip-flop circuits 317 and 318 respectively latch the outputs from the XOR operation units 315 and 316 in the first cycle, and output the latched data in the next cycle.

The XOR operation unit 319 outputs the XOR of the outputs from the XOR operation unit 316 and the flip-flop circuit 317 as 8-bit data DT [31:24]. The XOR operation unit 320 outputs the XOR of the outputs from the XOR operation unit 315 and the flip-flop circuit 318 as 8-bit data DT[15:8].

The XOR operation unit 325 outputs the XOR of the outputs from the multipliers 321 and 322, and the XOR operation unit 326 outputs the XOR of the outputs from the multipliers 323 and 324. The flip-flop circuits 327 and 328 respectively latch the outputs from the XOR operation units 325 and 326 in the first cycle, and output the latched data in the next cycle.

The XOR operation unit 329 outputs the XOR of the outputs from the XOR operation unit 326 and the flip-flop circuit 327 as 8-bit data DT [23: 16] . The XOR operation unit 330 outputs the XOR of the outputs from the XOR operation unit 325 and the flip-flop circuit 328 as 8-bit data DT[7:0].

The four pieces of 8-bit data DT[31:24], DT[23:16], DT[15:8], and DT[7:0] thus obtained are combined to be output as 32-bit output data O_DT[31:0].

Expressing I_DT[31:0] and O_DT[31:0] as 8-bit data a0 through a3 and b0 through b3 in the equations (1) through (8), the XOR of the first term and the second term in the equations (11), (12), (13), and (14) are latched by the flip-flop circuits 317, 327, 318, and 328, respectively, in the first cycle of the encryption process. In the next cycle, values b0, b1, b2, and b3 in the equations (11) through (14) are output as DT[31:24], DT[23: 16] , DT[15: 8] , and DT[7: 0] , respectively.

In the first cycle of the decryption process, the XOR of the first term and second term in the equations (15), (16), (17), and (18), are latched by the flip-flop circuits 317, 327, 318 and 328, respectively. In the next cycle, values b0, b1, b2 and b3 are output as DT[31:24], DT[23:16], DT[15:8], and DT[7:0], respectively.

Thus output data O_DT[31:0] in the next cycle is adopted as the operation result of the MixColumn transformation, and output data O_DT[31:0] in the first cycle is disregarded.

Fig. 9 shows another embodiment of the MixColumn transformation circuit in Fig. 7 (a third MixColumn transformation circuit). The MixColumn transformation circuit in Fig. 9 comprises selectors 401 and 404, and two operational circuits 402 and 403.

The operational circuit 402 comprises four multipliers 411 (MULe2), 412(MULb3), 413(MULd1), and 414 (MUL91), and three XOR operation units 415, 416, and 417. The operational circuit 403 comprises four multipliers 421 (MUL91), 422(MULe2), 423(MULb3), and 424 (MULd1), and three XOR operation units 425, 426, and 427.

In the first cycle, "0" is input as a selection signal hc, and "1" is input as the selection signal hc in the next cycle.

The selector 401 switches 32-bit input data I_DT[31:0] into 8-bit units. Specifically, when the selection signal hc is "0", the selector 401 outputs I_DT[31:24] to multipliers 411 and 421, I_DT[23:16] to multipliers 412 and 422, I_DT [15:8] to multipliers 413 and 423, and I_DT[7:0] to multipliers 414 and 424.

When the selection signal hc is "1", the selector 401 outputs I_DT [31: 24] to multipliers 413 and 423, I_DT[23: 16] to multipliers 414 and 424, I_DT[15:8] to multipliers 411 and 421, and I_DT[7:0] to multipliers 412 and 422.

The XOR operation unit 415 outputs the XOR of the outputs from multipliers 411 and 412, and the XOR operation unit 416 outputs the XOR of the outputs from multipliers 413 and 414. The XOR operation unit 417 outputs the XOR of the outputs from the XOR operation units 415 and 416 as 8-bit data DT[15:8].

The XOR operation unit 425 outputs the XOR of the outputs from multipliers 421 and 422, and the XOR operation unit 426 outputs the XOR of the outputs from multipliers 423 and 424. The XOR operation units 427 output the XOR of the outputs from the XOR operation units 425 and 426 as 8-bit data DT[7:0]. DT[15:8] and DT[7:0] are combined to be input into the selector 404.

The selector 404 switches 16-bit data DT[15:0] to upper 16 bits or lower 16 bits of 32-bit output data O_DT[31: 0]. Specifically, when the selection signal is "0", the selector 404 outputs DT[15:0] as the upper 16 bits O_DT[31:16] of O_DT[31:0], and when the selection signal hc is "1", outputs DT[15:0] as the lower 16 bits O_DT[15:0] of O_DT[31:0].

According to the MixColumn transformation circuit (described above), in the first cycle of the encryption process, values of b0 and b1 in the equations (11) and (12) are respectively output as DT[15:8] and DT[7:0], and combined to be output as O_DT[31:16]. In the next cycle, values of b2 and b3 in the equations (13) and (14) are respectively output as DT[15:8] and DT[7:0], and combined to be output as O_DT[15:0].

In the first cycle of the decryption process, values of b0 and b1 in the equations (15) and (16) are respectively output as DT[15:8] and DT[7:0], and combined to be output as O_DT [31:16]. In the next cycle, values of b2 and b3 in the equations (17) and (18) are respectively output as DT[15:8] and DT[7:0], and combined to be output as O_DT[15:0].

Meanwhile, the same transformation result can be obtained when "1" is input as the selection signal hc in the first cycle, and "0" is input as the selection signal hc in the next cycle.

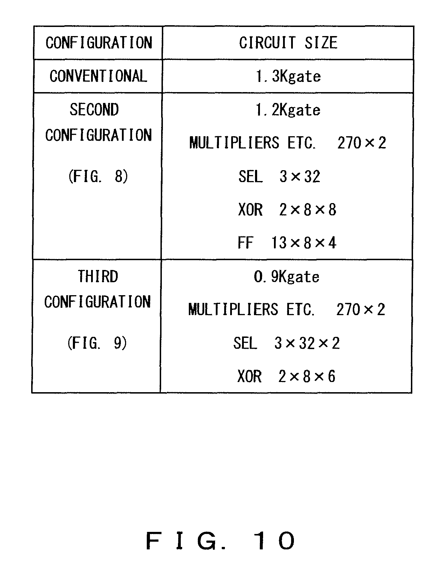

Fig. 10 shows the comparison result of the circuit sizes of the MixColum circuit in Fig. 4 and Fig. 5, the MixColum circuit in Fig. 8, and the MixColumn Circuit in Fig. 9. While the conventional configuration (Fig. 4 and Fig. 5) includes about 1300 gates, the number of gates in the second configuration (Fig. 8) and in the third configuration (Fig. 9) can be estimated as follows.

-Second configuration

The number of gates corresponding to the conventional operational circuit (multiplier and the like) in each operational circuit: 270
Selector: 3 per bit
XOR operation unit: 2 per bit
Flip-flop circuit: 13 per bit
Entire circuit: 270x2+3x32+2x8x8+13x8x4=1148

-Third configuration

The number of gates corresponding to the conventional operational circuit (multiplier and the like) in each operational circuit: 270
Selector: 3 per bit
XOR operation unit: 2 per bit
Entire circuit: 270x2+3x32+2x8x6=828

Therefore, the second configuration has a smaller circuit size than the conventional circuit by approximately 10%. The third configuration has a smaller circuit size than the conventional circuit by approximately 30%.

Next, a configuration for processing 32-bit data in four cycles using a single operational circuit is described by referring to Fig. 11 and Fig. 12.

Fig. 11 shows the configuration of a fourth MixColumn transformation circuit in an AES circuit. The MixColumn transformation circuit in Fig. 11 comprises selectors 601 and 603, and an operational circuit 602.

The operational circuit 602 comprises four multipliers 611(MULe2), 612(MULb3), 613(MULd1), and 614 (MUL91), four XOR operation units 615, 616, 619, and 620, and two flip-flop circuits 617 and 618.

In the first cycle, "0" is input as the selection signal hc. In the second cycle, "1" is input as the selection signal hc. In the third cycle, "2" is input as the selection signal hc. In the fourth cycle, "3" is input as the selection signal hc.

The selector 601 divides 32-bit input data I_DT[31:0] into four pieces of 8-bit data I_DT[31:24], I_DT[23:16], I_DT[15:8], and I_DT[7:0]. The selector 601 then outputs the 8-bit data, in accordance with the value of the selection signal hc, as follows.

-hc=0

I_DT[31:24]→ multipliers 611 and 613
I_DT[23:16]→ multipliers 612 and 614

-hc=1

I_DT[15:8]→ multipliers 611 and 613
I_DT[7:0]→ multipliers 612 and 614

-hc=2

I_DT[23:16]→ multipliers 611 and 613
I_DT[15:8]→ multipliers 612 and 614

-hc=3

I_DT[7:0]→ multipliers 611 and 613
I_DT[31:24]→ multipliers 612 and 614

The operations of the XOR operation units 615, 616, 619, and 620, and the flip-flop circuits 617 and 618 are the same as the XOR operation units 315, 316, 319, and 320, and the flip-flop circuits 317 and 318 in Fig. 8. The XOR operation unit 619 outputs the operation result as 8-bit data DT1[7:0]. The XOR operation unit 620 outputs the operation result as 8-bit data DT2[7:0].

The selector 603 switches DT1[7:0] and DT2[7:0] to O_DT[31:24], O_DT[23:16], O_DT[15:8], or O_DT[7:0] in the 32-bit output data O_DT[31:0].

Specifically, when the selection signal hc is "1", the selector 603 outputs DT1[7:0] and DT2[7:0] as O_DT[31:24] and O_DT[15:8], respectively. When the selection signal hc is "3", the selector 603 outputs DT1 [7: 0] and DT2 [7: 0] as O_DT[23:16] and O_DT[7:0], respectively.

According to the MixColumn transformation circuit (described above), in the first cycle of the encryption process the XOR of the first term and second term in the equations (11) and (13) are latched in the flip-flop circuits 617 and 618, respectively. Next, in the second cycle, values b0 and b2 in the equations (11) and (13) are output as DT1 [7:0] and DT2 [7:0], respectively.

Next, in the third cycle, the XOR of the second term and third term in the equations (12) and (14) are latched in the flip-flop circuits 617 and 618, respectively. In the fourth cycle, values of b1 and b3 in the equations (12) and (14) are output as DT1[7:0] and DT2[7:0], respectively.

In the first cycle of the decryption process the XOR of the first term and second term in the equations (15) and (17) are latched in the flip-flop circuits 617 and 618, respectively. Next, in the second cycle, values b0 and b2 in the equations (15) and (17) are output as DT1 [7:0] and DT2 [7:0], respectively.

Next, in the third cycle, the XOR of the second term and third term in the equations (16) and (18) are latched in the flip-flop circuits 617 and 618, respectively. In the fourth cycle, values of b1 and b3 in the equations (16) and (18) are output as DT1[7:0] and DT2[7:0], respectively.

Thus, output data O_DT[31:24] and O_DT[15:8] in the second cycle, and output data O_DT[23:16] and O_DT[7:0] in the fourth cycle, are adopted as the operation result of the MixColumn transformation; output data 0_DT[31:0] in the first cycle and the third cycle are disregarded.

Meanwhile, the same transformation result can be obtained when "2" is input as the selection signal hc in the first cycle, "3" is input as the selection signal hc in the second cycle, "0" is input as the selection signal hc in the third cycle, and "1" is input as the selection signal hc in the fourth cycle.

Fig. 12 shows the configuration of a fifth MixColumn transformation circuit in an AES circuit. The MixColumn transformation circuit in Fig. 12 comprises selectors 701 and 703, and an operational circuit 702.

The operational circuit 702 comprises four multipliers 711 (MULe2), 712 (MULb3), 713 (MULd1), and 714 (MUL91), and three XOR operation units 715, 716, and 717.

In the first cycle, "0" is input as the selection signal hc. In the second cycle, "1" is input as the selection signal hc. In the third cycle, "2" is input as the selection signal hc. In the fourth cycle, "3" is input as the selection signal hc.

The selector 701 divides 32-bit input data I_DT[31:0] into four pieces of 8-bit data I_DT[31:24], I_DT [23:16], I_DT[15:8], and I_DT[7:0]. The selector 701 then outputs the 8-bit data, in accordance with the value of the selection signal hc, as follows.

-hc=0

    I_DT[31:24]→ multiplier 711
    I_DT[23:16]→ multiplier 712
    I_DT[15:8]→ multiplier 713
    I_DT[7:0]→ multiplier 714

-hc=1

    I_DT[31:24]→ multiplier 714
    I_DT[23:16]→ multiplier 711
    I_DT[15:8]→ multiplier 712
    I_DT[7:0]→ multiplier 713

-hc=2

    I_DT[31:24]→ multiplier 713
    I_DT[23:16]→ multiplier 714
    I_DT[15:8]→ multiplier 711
    I_DT[7:0]→ multiplier 712

-hc=3

I_DT[31:24]→ multiplier 712
I_DT[23:16]→ multiplier 713
I_DT[15:8]→ multiplier 714
I_DT[7:0]→ multiplier 711

The operations in the XOR operation units 715 through 717 are the same as in the XOR operation units 415 through 417 in Fig. 9. The XOR operation unit 717 outputs the operation result as 8-bit data DT[7:0].

The selector 703 switches DT[7:0] to O_DT[31:24], O_DT[23:16], O_DT[15:8], or O_DT[7:0] for 32-bit output data O_DT[31:0].

Specifically, when the selection signal hc is "0", the selector 703 outputs DT[7:0] as O_DT [31:24]. When the selection signal hc is "1", the selector 703 outputs DT[7:0] as O_DT[23:16]. When the selection signal hc is "2", the selector 703 outputs DT[7:0] as O_DT[15:8]. When the selection signal hc is "3", the selector 703 outputs DT[7:0] as O_DT[7:0].

According to the MixColumn transformation circuit (described above), in the first cycle of the encryption process, the value of b0 in the equation (11) is output as O_DT[31:24] ; in the second cycle, the value of b1 in the equation (12) is output as O_DT[23:16] ; in the third cycle, the value of b2 in the equation (13) is output as O_DT[15:8] ; and in the fourth cycle, the value of b3 in the equation (14) is output as O_DT[7:0].

In the first cycle of the decryption process, the value of b0 in the equation (15) is output as O_DT [31:24] ; in the second cycle, the value of b1 in the equation (16) is output as O_DT [23:16]; in the third cycle, the value of b2 in the equation (17) is output as O_DT [15:8]; and in the fourth cycle, the value of b3 in the equation (18) is output as O_DT [7:0].

Meanwhile, the same transformation result can be obtained with a different order of values "0" through "3" that are input as the selection signal hc in the first through fourth cycles.

According to the MixColumn transformation circuits in Fig. 11 and Fig. 12, the circuit sizes are further reduced compared to the MixColumn transformation circuits in Fig. 8 and Fig. 9.

In any of the above aspects, the various features may be implemented in hardware, or as software modules running on one or more processors. Features of one aspect may be applied to any of the other aspects.

The invention also provides a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A cryptographic operation apparatus comprising:

   a dividing device (101, 301, 601) for dividing an input data string into a first, a second, a third, and a fourth data string and outputting the data strings;
   a first multiplying device (102-1, 211, 311, 611) for multiplying the first data string by a first coefficient and outputting a first multiplication result in a first period, and multiplying the third data string by the first coefficient and outputting a second multiplication result in a second period;
   a second multiplying device (102-2, 212, 312, 612) for multiplying the second data string by a second coefficient and outputting a third multiplication result in the first period, and multiplying the fourth data string by the second coefficient and outputting a fourth multiplication result in the second period;
   a third multiplying device (102-3, 213, 313, 613) for multiplying the first data string by a third coefficient and outputting a fifth multiplication result in the first period, and multiplying the third data string by the third coefficient and outputting a sixth multiplication result in the second period;
   a fourth multiplying device (102-4, 214, 314, 614) for multiplying the second data string by a fourth coefficient and outputting a seventh multiplication result in the first period, and multiplying the fourth data string by the fourth coefficient and outputting an eighth multiplication result in the second period;
   a latching device (103, 215, 315 through 318, 615 through 618) for latching an exclusive-OR of the first and third multiplication results and an exclusive-OR of the fifth and seventh multiplication results in the first period; and
   an exclusive-OR device (104, 215, 319, 320, 619, 620) for outputting an exclusive-OR of the exclusive-OR of the first and third multiplication results and an exclusive-OR of the sixth and eighth multiplication results, and outputting an exclusive-OR of the exclusive-OR of the fifth and seventh multiplication results and an exclusive-OR of the second and fourth multiplication results, in the second period.

2. The cryptographic operation apparatus according to claim 1, further comprising:

a fifth multiplying device (321) for multiplying the first data string by a fifth coefficient and outputting a ninth multiplication result in the first period, and multiplying the third data string by the fifth coefficient and outputting a tenth multiplication result in the second period,
a sixth multiplying device (322) for multiplying the second data string by a sixth coefficient and outputting an eleventh multiplication result in the first period, and multiplying the fourth data string by the sixth coefficient and outputting a twelfth multiplication result in the second period;
a seventh multiplying device (323) for multiplying the first data string by a seventh coefficient and outputting a thirteenth multiplication result in the first period, and multiplying the third data string by the seventh coefficient and outputting a fourteenth multiplication result in the second period;
an eighth multiplying device (324) for multiplying the second data string by an eighth coefficient and outputting a fifteenth multiplication result in the first period, and multiplying the fourth data string by the eight coefficient and outputting a sixteenth multiplication result in the second period;
a latching device (321, 325 through 328) for latching an exclusive-OR of the ninth and eleventh multiplication results and an exclusive-OR of the thirteenth and fifteenth multiplication results in the first period; and
an exclusive-OR device (329, 330) for outputting an exclusive-OR of the exclusive-OR of the ninth and eleventh multiplication results and an exclusive-OR of the fourteenth and sixteenth multiplication results, and outputting an exclusive-OR of the exclusive-OR of the thirteenth and fifteenth multiplication results and an exclusive-OR of the tenth and twelfth multiplication results, in the second period.

3. The cryptographic operation apparatus according to claim 1, wherein
the first multiplying device (611) multiplies the second data string by the first coefficient and outputs a ninth multiplication result in a third period, and multiplies the fourth data string by the first coefficient and outputs a tenth multiplication result in a fourth period;
the second multiplying device (612) multiplies the third data string by the second coefficient and outputs an eleventh multiplication result in the third period, and multiplies the first data string by the second coefficient and outputs a twelfth multiplication result in the fourth period;
the third multiplying device (613) multiplies the second data string by the third coefficient and outputs a thirteenth multiplication result in the third period, and multiplies the fourth data string by the third coefficient and outputs a fourteenth multiplication result in the fourth period; and
the fourth multiplying device (614) multiplies the third data string by the fourth coefficient and outputs a fifteenth multiplication result in the third period, and multiplies the first data string by the fourth coefficient and outputs a sixteenth multiplication result in the fourth period;
the latching device (615 through 618) latches an exclusive-OR of the ninth and eleventh multiplication results and an exclusive-OR of the thirteenth and fifteenth multiplication results in the third period; and
the exclusive-OR device (619, 620) outputs an exclusive-OR of the exclusive-OR of the ninth and eleventh multiplication results and an exclusive-OR of the fourteenth and sixteenth multiplication results, and outputs an exclusive-OR of the exclusive-OR of the thirteenth and fifteenth multiplication results and an exclusive-OR of the tenth and twelfth multiplication results in the fourth period.

4. The cryptographic operation apparatus according to any of the preceding claims, wherein the dividing device divides an input data string, being an object of a MixColumn transformation in an encryption process or an InvMixColumn transformation in a decryption process, and the exclusive-OR device outputs an exclusive-OR being a transformation result of the MixColumn transformation or the InvMixColumn transformation.

5. A cryptographic operation apparatus, comprising:

a dividing device (101, 401, 701) for dividing an input data string into a first, a second, a third, and a fourth data string and outputting the data strings;
a first multiplying device (102-1, 211, 411, 711) for multiplying the first data string by a first coefficient and outputting a first multiplication result in a first period, and multiplying a data string input from the dividing device by the first coefficient and outputting a second multiplication result in a second period;
a second multiplying device (102-2, 212, 412, 712) for multiplying the second data string by a second coefficient and outputting a third multiplication result in the first period, and multiplying a data string input from the dividing device by the second coefficient and outputting a fourth multiplication result in the second period;
a third multiplying device (102-3, 213, 413, 713) for multiplying the third data string by a third coefficient and outputting a fifth multiplication result in the first period, and multiplying a data string input from the dividing device by the third coefficient and outputting a sixth multiplication result in the second period;
a fourth multiplying device (102-4, 214, 414, 714) for multiplying the fourth data string by a fourth coefficient and outputting a seventh multiplication result in the first period, and multiplying a data string input by the dividing device by the fourth coefficient and outputting an eighth multiplication result in the second period; and
an exclusive-OR device (104, 215, 415 through 417, 715 through 717) for outputting an exclusive-OR of the first, third, fifth, and seventh multiplication results in the first period, and outputting an exclusive-OR of the second, fourth, sixth, and eighth multiplication results in the second period, wherein
the dividing device outputs the first, second, third, and fourth data strings respectively to the first, second, third and fourth multiplying devices in the first period, and outputs the first, second, third and fourth data strings to the first, second, third and fourth multiplying devices in the second period, in a different order than an order in the first period.

6. The cryptographic operation apparatus according to claim 5, further comprising:

a fifth multiplying device (421) for multiplying the first data string by a fifth coefficient and outputting a ninth multiplication result in the first period, and multiplying a data string input from the dividing device by the fifth coefficient and outputting a tenth multiplication result in the second period;
a sixth multiplying device (422) for multiplying the second data string by a sixth coefficient and outputting an eleventh multiplication result in the first period, and multiplying a data string input from the dividing device by the sixth coefficient and outputting a twelfth multiplication result in the second period;
a seventh multiplying device (423) for multiplying the first data string by a seventh coefficient and outputting a thirteenth multiplication result in the first period, and multiplying a data string input from the dividing device by the seventh coefficient and outputting a fourteenth multiplication result in the second period;
an eighth multiplying device (424) for multiplying the second data string by an eighth coefficient and outputting a fifteenth multiplication result in the first period, and multiplying a data string input from the dividing device by the eighth coefficient and outputting a sixteenth multiplication result in the second period; and
an exclusive-OR device (425 through 427) for outputting an exclusive-OR of the ninth, eleventh, thirteenth, and fifteenth multiplication results in the first period, and outputting an exclusive-OR of the tenth, twelfth, fourteenth and sixteenth multiplication results in the second period, wherein
the dividing device outputs the first, second, third, and fourth data strings respectively to the fifth, sixth, seventh, and eighth multiplying devices in the first period, and outputs the first, second, third, and fourth data strings to the fifth, sixth, seventh, and eighth multiplying devices in the second period, in an order in which the first, second, third, and fourth data strings are output to the first, second, third, and fourth multiplication devices.

7. The cryptographic operation apparatus according to claim 5, wherein
the dividing device (701) outputs the first, second, third and fourth data strings to the first, second, third and fourth multiplying devices in a third period, in a different order than the orders in the first and second periods, and outputs the first, second, third and fourth data strings to the first, second, third and fourth multiplying devices in a fourth period, in a different order than the orders in the first, second, and third periods;
the first multiplying device (711) multiplies a data string input from the dividing device by the first coefficient and outputs a ninth multiplication result in the third period, and multiplies a data string input from the dividing device by the first coefficient and outputs a tenth multiplication result in the fourth period;
the second multiplying device (712) multiplies a data string input from the dividing device by the second coefficient and outputs an eleventh multiplication result in the third period, and multiplying a data string input from the dividing device by the second coefficient and outputs a twelfth multiplication result in the fourth period;
the third multiplying device (713) multiplies a data string input from the dividing device by the third coefficient and outputs a thirteenth multiplication result in the third period, and multiplies a data string input from the dividing device by the third coefficient and outputs a fourteenth multiplication result in the fourth period;
the fourth multiplying device (714) multiplying a data string input from the dividing device by the fourth coefficient and outputs a fifteenth multiplication result in the third period, and multiplying a data string input from the dividing device by the fourth coefficient and outputs a sixteenth multiplication result in the fourth period; and
the exclusive-OR device (715 through 717) outputs an exclusive-OR of the ninth, eleventh, thirteenth, and fifteenth multiplication results in the third period, and outputs an exclusive-OR of the tenth, twelfth, fourteenth, and sixteenth multiplication results in the fourth period.

8. The cryptographic operation apparatus according to any of claims 5 to 7, wherein the dividing device divides an input data string, being an object of a MixColumn transformation in an encryption process or an InvMixColumn transformation in a decryption process, and the exclusive-OR device outputs an exclusive-OR being a transformation result of the MixColumn transformation or the InvMixColumn transformation.

KEY DATA  128, 192, 256 BITS          INPUT DATA (PLAINTEXT)  128 BITS

801 — **KEY SCHEDULE**

Round Key  0 ————→ ⊕ — 802

803-1

Round Key  1 ————→ **Round PROCESS**    ByteSub TRANSFORMATION
ShiftRow TRANSFORMATION
MixColumn TRANSFORMATION
Round Key ADDITION

803-(Nr-1)

Round Key  Nr-1 ————→ **Round PROCESS**    ByteSub TRANSFORMATION
ShiftRow TRANSFORMATION
MixColumn TRANSFORMATION
Round Key ADDITION

803-Nr

Round Key  Nr ————→ **Final Round PROCESS**    ByteSub TRANSFORMATION
ShiftRow TRANSFORMATION
Round Key ADDITION

OUTPUT DATA (CIPHERTEXT)  128 BITS

# F I G.  1

KEY DATA   128, 192, 256 BITS        INPUT DATA(CIPHERTEXT)   128 BITS

901

KEY
SCHEDULE

Round Key   Nr

902

903-(Nr-1)

InvShiftRow TRANSFORMATION
InvByteSub TRANSFORMATION
Round Key ADDITION
InvMixColumn TRANSFORMATION

Round Key   Nr-1

Round
PROCESS

903-1

InvShiftRow TRANSFORMATION
InvByteSub TRANSFORMATION
Round Key ADDITION
InvMixColumn TRANSFORMATION

Round Key   1

Round
PROCESS

903-0

InvShiftRow TRANSFORMATION
InvByteSub TRANSFORMATION
Round Key ADDITION

Round Key   0

Final
Round
PROCESS

OUTPUT DATA(PLAINTEXT)   128 BITS

F I G.   2

INPUT

↓ 128bit

SELECTOR —— 1001

n bit

ByteSub
TRANSFORMATION
UNIT
1002

1003 —— Round Key
ADDITION UNIT

Round Key
OR
all "0"

1004
MixColumn
TRANSFORMATION UNIT

1 2 3 4

1005 —— SELECTOR

1006 —— Round Key
ADDITION UNIT

Round Key
OR
all "0"

1007 —— ShiftRow
TRANSFORMATION
UNIT

n bit

F I G. 3

I_DT[31:0]

32

[31:24]    [23:16]    [15:8]    [7:0]

8    8    8    8

1104
1103
1102
1101

MULe2    MULb3    MULd1    MUL91

1111    1115    1112    1113    1116    1114

1117

8    8    8    8
[31:24]    [23:16]    [15:8]    [7:0]

32

O_DT[31:0]

F I G. 4

F I G. 5

INPUT DATA STRING

101 — DIVIDING DEVICE

102-1 — FIRST MULTIPLYING DEVICE  102-2 — SECOND MULTIPLYING DEVICE  102-3 — THIRD MULTIPLYING DEVICE  102-4 — FOURTH MULTIPLYING DEVICE

103 — LATCHING DEVICE

104 — EXCLUSIVE-OR DEVICE

EXCLUSIVE-OR

F I G. 6

I_DT[31:0]

/ 32

[31:24]        [23:16]        [15:8]         [7:0]

/ 8            / 8            / 8            / 8

202

201

| MULe2 | MULb3 | MULd1 | MUL91 |

211           212           213           214

215

XOR CIRCUIT

8        8
[15:8]   [7:0]
[31:24]  [23:16]

32

O_DT[31:0]

F I G. 7

F I G. 8

I_DT[31:0]

32

EP 1 933 495 A2

401

hc → | SEL |

8 | 8 | 8 | 8 | 8 | 8 | 8 | 8

[31:24] | [23:16] | [15:8] | [7:0] | [31:24] | [23:16] | [15:8] | [7:0]
[15:8] | [7:0] | [31:24] | [23:16] | [15:8] | [7:0] | [31:24] | [23:16]

402

403

| MULe2 | MULb3 | MULd1 | MUL91 | | MUL91 | MULe2 | MULb3 | MULd1 |

411 | 412 | 413 | 414 | 421 | 422 | 423 | 424

⊕ 415 | ⊕ 416 | ⊕ 425 | ⊕ 426

417 | 427

⊕ | ⊕

8 DT[15:8] | 8 DT[7:0]

16 DT[15:0]

hc → | SEL | 404

32

O_DT[31:0]

F I G. 9

| CONFIGURATION | CIRCUIT SIZE |
|---|---|
| CONVENTIONAL | 1.3Kgate |
| SECOND CONFIGURATION (FIG. 8) | 1.2Kgate<br><br>MULTIPLIERS ETC.   $270 \times 2$<br><br>SEL  $3 \times 32$<br><br>XOR  $2 \times 8 \times 8$<br><br>FF  $13 \times 8 \times 4$ |
| THIRD CONFIGURATION (FIG. 9) | 0.9Kgate<br><br>MULTIPLIERS ETC.   $270 \times 2$<br><br>SEL  $3 \times 32 \times 2$<br><br>XOR  $2 \times 8 \times 6$ |

F I G. 1 0

I_DT[31:0]

601

hc → | SEL |

8          8          8          8

[31:24]    [23:16]    [31:24]    [23:16]
[15:8]     [7:0]      [15:8]     [7:0]
[23:16]    [15:8]     [23:16]    [15:8]
[7:0]      [31:24]    [7:0]      [31:24]

602

| MULe2 | MULb3 | MULd1 | MUL91 |

611    615    612    613    616    614

617                      618

| FF |                  | FF |

619    620

8  DT1[7:0]              8  DT2[7:0]

hc → | SEL | 603

32

O_DT[31:0]

# F I G. 1 1

I_DT[31:0]

701

hc → | SEL |

8    8    8    8

| [31:24] | [23:16] | [15:8] | [7:0] |
| [23:16] | [15:8] | [7:0] | [31:24] |
| [15:8] | [7:0] | [31:24] | [23:16] |
| [7:0] | [31:24] | [23:16] | [15:8] |

702

| MULe2 | MULb3 | MULd1 | MUL91 |

711    715    712    713    716    714

717

8  DT[7:0]

hc → | SEL | 703

32

O_DT[31:0]

# F I G .  1 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003015522 A

**Non-patent literature cited in the description**

- *Federal Information Processing Standards Publication 197,* 02 October 2006, http://csrc.nist.gov/publications/fips/fips197/fips-197.pdf